# FASCICULE DE BREVET EUROPEEN

(11) **EP 1 078 707 B1**
(45) Date de publication et mention de la délivrance du brevet: **11.02.2004**
(21) Numéro de dépôt: 00402344.6
(22) Date de dépôt: 23.08.2000
(51) Int. Cl.: B23K 11/25

(54) **Procédé de selection automatique de séquence de soudage pour pince de soudage manuelle et pince de soudage manuelle pour la mise en oeuvre du procédé**
Verfahren zur automatischen Auswahl von Schweissaneinanderreihen für manuelle Schweisszange und manuelle Schweisszange zur Durchführung des Verfahrens
Automatic selection method of welding sequences for a manual welding gun and manual welding gun used to carry out the method

(30) Priorité: 26.08.1999 FR 9910813
(43) Date de publication de la demande: 28.02.2001
(73) Titulaire: ARO, F-72500 Château-du-Loir (FR)
(72) Inventeur: Lepeltier, Hervé, 49000 Angers (FR)
(74) Mandataire: Bérogin, Francis

(56) Documents cités:
- PATENT ABSTRACTS OF JAPAN vol. 1998, no. 13, 30 novembre 1998 (1998-11-30) & JP 10 216955 A (MAZDA MOTORS CORP), 18 août 1998 (1998-08-18)
- PATENT ABSTRACTS OF JAPAN vol. 16, no. 34 (M-1204), 28 janvier 1992 (1992-01-28) & JP 03 243285 A (TAKAOKA ELECTRIC MFG CO LTD), 30 octobre 1991 (1991-10-30)
- PATENT ABSTRACTS OF JAPAN vol. 1996, no. 12, 26 décembre 1996 (1996-12-26) & JP 08 206846 A (KAWASAKI HEAVY IND LTD), 13 août 1996 (1996-08-13)

## Description

La présente invention concerne tout d'abord un procédé de sélection automatique d'une séquence de soudage pour pince de soudage manuelle, s'agissant en particulier d'une pince manuelle de soudage électrique à résistance par points pour l'assemblage de tôles.

En principe, une telle pince manuelle comporte un corps de pince relié par un câble souple à une alimentation en courant électrique et portant éventuellement un transformateur-abaisseur propre à alimenter la pince de soudage en courant à haute intensité, ledit corps de pince étant suspendu par l'intermédiaire d'une liaison articulée à une élingue s'étendant au repos suivant la verticale et pourvue préférentiellement d'un enrouleur-équilibreur. Cette liaison articulée comprend habituellement, d'une part une couronne circulaire de pivotement à l'intérieur de laquelle ledit corps de pince peut tourner autour d'un axe principal, longitudinal et orientable, d'autre part un pivot monté sur ladite couronne circulaire et grâce auquel ladite couronne et donc le corps de la pince peuvent pivoter sur l'extrémité inférieure de ladite élingue autour d'un axe horizontal et latéral perpendiculaire audit axe longitudinal. Une telle pince comporte enfin au moins une poignée de manipulation à l'aide de laquelle un opérateur peut orienter convenablement la pince par rapport aux tôles à souder, suite à quoi il peut déclencher ladite séquence de soudage en actionnant une commande par gâchette ou analogue sur la pince.

Comme on le sait, une séquence de soudage possède comme principaux paramètres l'intensité du courant de soudage, l'effort appliqué sur les tôles entre les électrodes et le temps de soudage, paramètres qui doivent être précisément déterminés pour chaque emplacement de soudage. Actuellement, c'est l'opérateur qui, après avoir positionné la pince par rapport aux tôles à souder, sélectionne la séquence spécifique appropriée puis déclenche le cycle de soudage. Le risque existe donc que par erreur, défaillance de mémoire ou d'attention, l'opérateur sélectionne une séquence qui ne soit pas adaptée à l'emplacement de la soudure, d'où production d'un point de soudure défectueux. Ce risque est variable car il peut dépendre de la fatigue de l'opérateur et des conditions de l'environnement, mais il est très difficile à éliminer complètement. Pour le diminuer, on est amené à limiter à deux ou trois le nombre de séquences différentes qui sur chaque pince peuvent être sélectionnées par l'opérateur.

Pour éviter de créer une contrainte préjudiciable au rendement et à la souplesse d'utilisation des pinces, en obligeant à mettre en oeuvre un nombre de pinces manuelles relativement grand dans une zone de soudage, lorsqu'il y a un grand nombre de séquences de soudage différentes, on peut assurer la sélection de la séquence spécifique par la sélection manuelle d'une séquence de soudage en utilisant une roue codeuse ou des contacteurs situés sur la pince ou sur l'armoire de soudage, ou encore par fermeture de contacts extérieurs à l'aide d'un système pouvant être automatisé et pouvant faire appel au déplacement d'une palette à l'aide de la pince pour fermer les contacts correspondant à la séquence de soudage, à l'utilisation d'un automate programmable pour préciser le numéro de la séquence en fonction de l'occurrence du point de soudage, ou encore à l'utilisation d'un délimiteur de zone lorsque les points de soudage différents sont réalisés dans différentes zones de l'atelier, toutes solutions qui sont onéreuses ou contraignantes pour l'opérateur.

Le but de la présente invention est d'éliminer tous ces inconvénients des techniques antérieures, et d'automatiser la sélection de la séquence de soudage en fonction de l'orientation de la pince par rapport à une direction de référence qui sera ici la verticale. Ce faisant, on pourra utiliser une même pince pour un plus grand nombre de points de soudage différents sans risque d'erreur quant au choix de la séquence de soudage correcte pour chaque point.

A cet effet, un procédé de sélection automatique du type défini au début est, conformément à la présente invention, et selon la revendication 1, où ledit corps de la pince est solidaire d'un boîtier d'inclinomètre, lequel est adapté à établir sous la forme de signaux au moins deux informations :
a) une information représentative de la valeur et du sens de l'angle de pivotement dudit corps de pince autour dudit axe principal et longitudinal par rapport à un axe de référence; et
b) une information représentative de la valeur et du sens de l'angle de pivotement dudit corps de pince autour dudit axe latéral par rapport audit axe de référence,
par suite de quoi ces informations sont utilisées pour identifier l'emplacement de soudage et effectuer la sélection automatique de la séquence de soudage appropriée correspondant à cet emplacement, la séquence de soudage identifiée étant codée de façon à pouvoir être transférée puis exécutée par une armoire de commande de soudage.

L'invention consiste donc pour l'essentiel à effectuer une sélection automatique de la séquence spécifique de soudage souhaitée en un emplacement déterminé des tôles à souder, en fonction de l'orientation de la pince, c'est-à-dire des inclinaisons du corps de la pince par rapport à la référence verticale lorsque les électrodes seront positionnées correctement sur les tôles en cet emplacement. De plus, la position des électrodes par rapport à la tôle influant directement sur la qualité de la soudure au point de soudage, on pourra prévoir de n'autoriser l'exécution du cycle de soudage que si les électrodes sont effectivement positionnées correctement par rapport à la tôle en cet emplacement, c'est-à-dire si la pince se situe globalement dans un plan parallèle à celui des tôles à souder, les électrodes accostant alors perpendiculairement à la surface des tôles ; la tolérance sur le positionnement de la pince pourra cependant être réglable.

Un procédé conforme à l'invention peut encore être caractérisé par une phase préalable de programmation ou de reprogrammation des différents points de soudage en mode "apprentissage", effectuée par l'intermédiaire d'une interface séparée de ladite pince, prévue sur un boîtier mobile et autonome, et propre à être connectée à ladite armoire de commande au moment de cette programmation ou reprogrammation, ladite phase consistant, pour chaque point de soudage, à positionner la pince de soudage dans la position souhaitée au point de soudage concerné et à enregistrer dans une mémoire les angles caractéristiques du pivotement du corps de la pince autour desdits axes longitudinal et latéral ainsi que les tolérances acceptables pour ces angles, et l'identification du numéro de la séquence de soudage souhaitée au point considéré, une reprogrammation étant précédée par une opération d'effacement, de ladite mémoire, des paramètres précédemment enregistrés.

Bien entendu, avant de valider le programme ou nouveau programme, on vérifie qu'il n'y a pas concurrence entre la position repérée et une position déjà programmée ; si c'est le cas, le programmeur a le choix entre abandonner ce nouveau programme ou écraser le programme concurrent précédent. En tout état de cause, lors d'un cycle d'effacement, le programmeur a le choix entre effacer tous les programmes résidant en mémoire ou bien de les effacer un par un. Dans ce dernier cas, le programmeur sélectionne le programme à effacer en plaçant la pince dans la position correspondant à ce programme.

Pour augmenter la fiabilité du procédé, on peut encore prévoir de programmer dans un séquenceur de soudage un ordre déterminé de déroulement des séquences de soudage, et de vérifier, grâce audit boîtier d'inclinomètre, sa concordance avec la séquence détectée.

Dans le même esprit, on peut encore prévoir la mise en oeuvre d'une opération de vérification de la position des électrodes, par rapport aux tôles à souder, à l'emplacement de la soudure, afin de contrôler que l'opérateur oriente convenablement la pince en cet emplacement. Pour ce faire, on pourra utiliser par exemple une caméra vidéo ou tout autre système de positionnement en trois dimensions.

Avantageusement, un procédé conforme à l'invention peut encore être caractérisé en ce que ledit boîtier d'inclinomètre comprend au moins deux accéléromètres propres à mesurer les déplacements angulaires, par rapport à un axe de référence vertical, desdits axes longitudinal et latéral du corps de la pince.

Ces accéléromètres, étant soumis à l'accélération de la pesanteur, permettront en effet de connaître l'inclinaison des axes de référence du corps de la pince par rapport à un axe de référence vertical.

Avantageusement encore, ledit boîtier d'inclinomètre comprend un troisième accéléromètre propre à mesurer les déplacements angulaires, par rapport audit axe de référence vertical, d'un troisième axe du corps de la pince de soudage, perpendiculaire auxdits axes latéral et longitudinal.

La mesure donnée par cet inclinomètre permettra en principe de différencier deux positions symétriques par rapport à la verticale du point de vue des capteurs, mais qui correspondent à deux positions bien distinctes de la pince.

Sur le plan pratique, on peut encore prévoir que chacun des plans verticaux contenant les axes longitudinal et latéral du corps de la pince est divisé, de part et d'autre du plan horizontal, en un certain nombre de secteurs identifiables, le repérage de l'orientation de la pince s'effectuant alors par l'identification des deux secteurs dans lesquels se trouve l'axe des deux accéléromètres respectifs correspondants.

L'identification de ces secteurs (de par exemple 5° d'arc chacun) pourra bien entendu se faire avec une certaine tolérance. De même, au moment de la programmation, on déterminera à quel secteur de chaque axe appartient le point de soudage pour un positionnement correct de la pince. La tolérance pourra être par exemple de ± 10° par rapport à la position programmée, et ceci selon chaque axe.

A titre facultatif, on peut encore prévoir que ledit corps de la pince porte supplémentairement un détecteur de rotation autour dudit axe de référence vertical, par exemple un codeur optique, pour mesurer la rotation de la pince autour de cet axe.

Cette disposition suppléera au fait que les accéléromètres sont insensibles aux rotations de la pince dans un plan horizontal, autour de l'axe vertical de référence. Elle pourra donc être mise en oeuvre lorsque l'on souhaitera connaître également les angles de cette rotation de la pince autour de la verticale.

La présente invention concerne encore, selon la revendication 9, une pince manuelle de soudage électrique par points du type mentionné au début, pour la mise en oeuvre du procédé susdéfini, cette pince étant caractérisée en ce que ledit corps de la pince porte un boîtier d'inclinomètre, lequel est adapté à fournir sous la forme de signaux au moins deux informations :
a) une information représentative de la valeur et du sens de l'angle de pivotement dudit corps de pince autour dudit axe principal et longitudinal par rapport à un axe de référence; et
b) une information représentative de la valeur et du sens de l'angle de pivotement dudit corps de pince autour dudit axe latéral par rapport audit axe de référence,
par suite de quoi ces informations peuvent être utilisées pour identifier l'emplacement de soudage et effectuer la sélection automatique de la séquence de soudage appropriée correspondant à cet emplacement, la séquence de soudage identifiée étant codée de façon à pouvoir être transférée puis exécutée par une armoire de commande de soudage.

Il est avantageux, notamment au point de vue du coût, de l'encombrement, de la robustesse et de la réduction du temps de réponse, que ce boîtier d'inclinomètre mette en oeuvre des accéléromètres de type capacitif, sensibles à l'accélération de la pesanteur et fournissant un signal d'inclinaison du type à impulsions modulées en largeur.

Les dessins qui suivent, donnés à titre d'exemples nullement limitatifs, permettront de mieux comprendre la présente invention. Dans ces dessins :
- la figure 1 représente une pince manuelle de soudage électrique par points suspendue à une élingue et manipulée par un opérateur;
- la figure 2 est une vue en élévation plus détaillée de cette pince, et la figure 3 une vue de dessus, sans les électrodes ;
- la figure 4 représente un circuit utilisable pour la mesure d'une variation de capacité de l'accéléromètre ;
- la figure 5 montre schématiquement le découpage de l'espace entre un axe du corps de la pince et la direction verticale de référence, utilisable par exemple pour la programmation des points de soudage et des zones de soudage acceptables pour ce point.

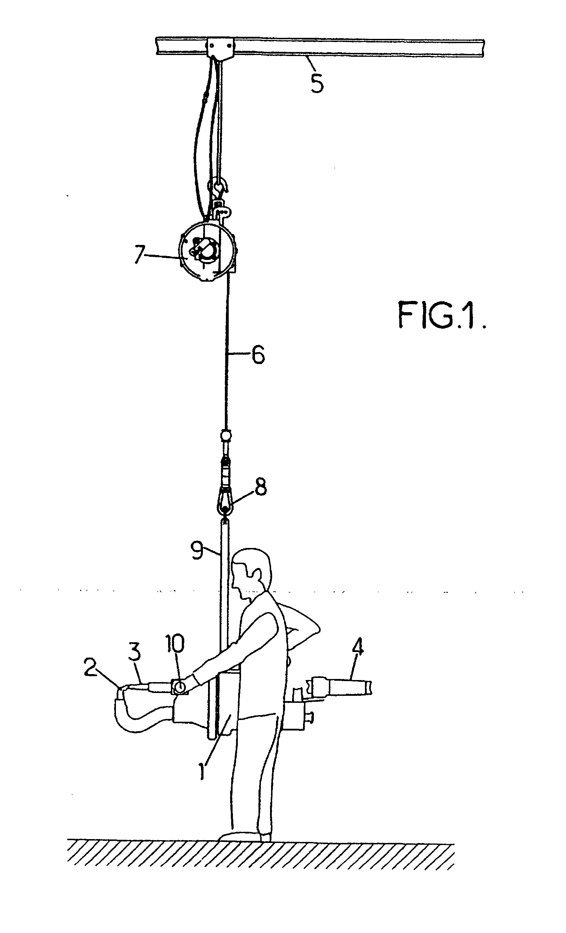

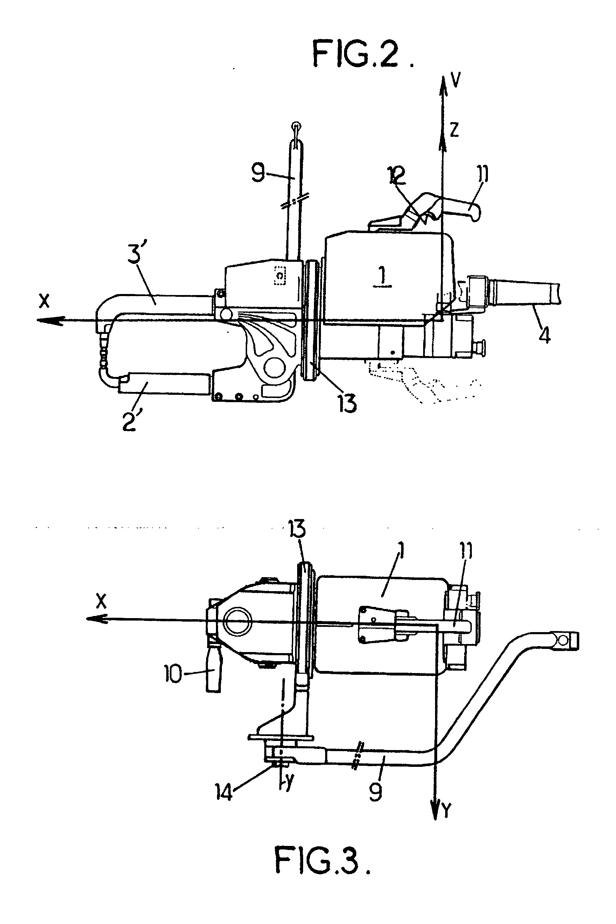

Sur la figure 1 on a représenté schématiquement en 1 un corps de pince manuelle de soudage électrique par points, destinée notamment à souder des tôles (non représentées), grâce à des électrodes de soudage 2 et 3. Ce corps de pince peut porter son propre transformateur, relié à une source d'alimentation électrique par un câble souple 4, lequel peut contenir éventuellement ou être doublé par un circuit d'eau de refroidissement pour les électrodes. L'ensemble est suspendu à un rail 5 par l'intermédiaire d'une élingue 6 pourvue d'un enrouleur 7 comportant un dispositif d'équilibrage du poids de la pince, par exemple du type à ressort. La liaison entre le mousqueton 8 de l'élingue 6 et le corps 1 de la pince s'effectue par l'intermédiaire d'une barre rigide 9. Pour la manipulation de la pince, l'opérateur dispose de deux poignées 10 et 11. Cette dernière est visible sur la vue en élévation plus détaillée de la figure 2, dans laquelle on a représenté des électrodes 2' et 3', légèrement différentes de celles de la figure 1 ; la poignée 11 porte avantageusement une gâchette ou analogue 12, grâce à laquelle l'opérateur peut déclencher la séquence de soudage lorsqu'il a assuré le positionnement des électrodes par rapport aux tôles à souder.

Pour effectuer ce positionnement, l'opérateur peut bien entendu faire pivoter le corps 1 de la pince autour de l'axe vertical V que constitue l'élingue 6. Il peut également le faire pivoter autour d'un axe longitudinal et orientable X, le corps 1 étant à cet effet monté pivotant dans une couronne circulaire 13 reliée à l'extrémité inférieure de la barre rigide 9 (à la figure 3, cette barre est supposée rabattue dans le plan horizontal). L'opérateur peut encore faire pivoter le corps 1 de la pince autour de l'axe latéral et horizontal y d'un pivot 14 reliant de façon articulée l'extrémité inférieure de la barre rigide 9 à la couronne circulaire 13.

Ainsi on peut associer au corps de la pince un système de référence de position à trois axes : l'axe de pivotement X ou axe longitudinal de la pince, un axe vertical Z parallèle à l'élingue 6, et un axe latéral Y parallèle à l'axe de rotation y et perpendiculaire aux axes X et Z. Etant donné que le boîtier d'inclinomètre (non représenté sur les figures 1 à 3) effectue les mesures des pivotements de la pince par l'intermédiaire d'accéléromètres sensibles à l'accélération de la pesanteur, le seul axe de référence possible est la verticale V. Par conséquent, l'inclinomètre mesurera le pivotement du corps de la pince sur l'axe X par mesure du pivotement de l'axe Y par rapport à la verticale V, grâce à un accéléromètre soumis aux efforts s'exerçant dans le plan vertical contenant l'axe Y, et le pivotement du corps de la pince sur l'axe y par mesure du pivotement de l'axe X par rapport à la verticale, grâce à un accéléromètre soumis aux efforts s'exerçant dans le plan vertical contenant l'axe X. Un troisième accéléromètre de l'inclinomètre pourra en outre fournir un signal représentatif du pivotement de l'axe Z du corps de la pince par rapport à la verticale V, dans le cas où il serait nécessaire de distinguer entre deux pivotements symétriques autour des axes X et y.

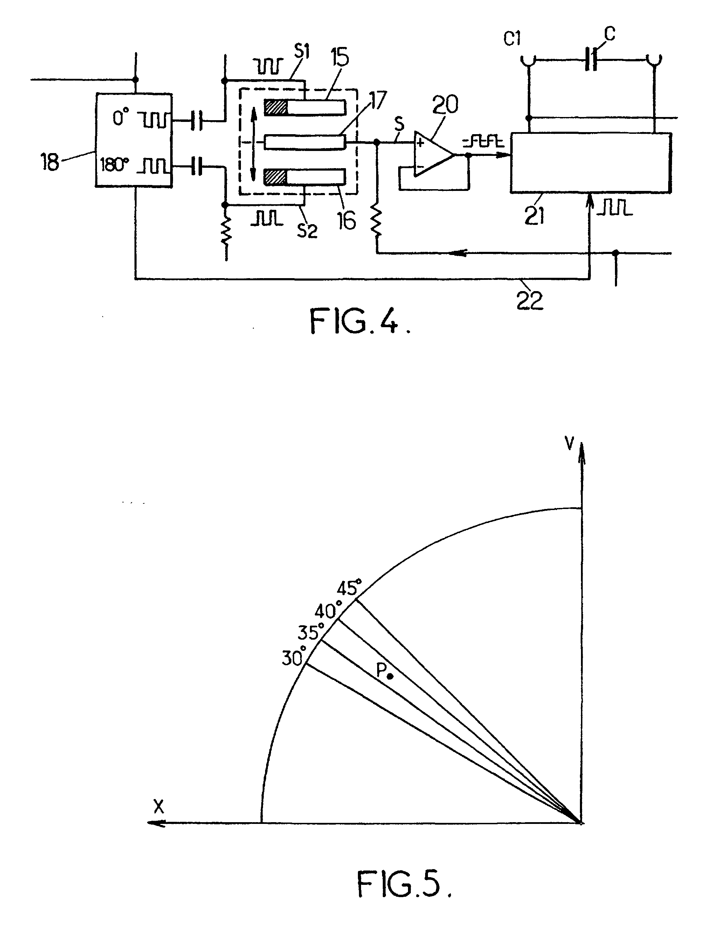

Comme on l'a indiqué plus haut, les accéléromètres seront de préférence du type capacitif. L'accélération s'exerçant sur ces capteurs se traduisant par le déplacement d'une masse soumise à l'action antagoniste d'un ressort, la variation de capacité du capteur est proportionnelle à ce déplacement lorsqu'il est relativement réduit, et la mesure de cette variation permet donc de connaître ce déplacement et par suite l'accélération s'exerçant sur le capteur, et donc son angle de pivotement par rapport à la verticale V. Un circuit intégré de mesure d'une telle variation de capacité, avec des capteurs fournissant des signaux impulsionnels modulés en phase, est représenté à la figure 4.

Le capteur comporte plusieurs cellules unitaires et une masselotte commune en forme de peigne. Le détecteur de variation de capacité est composé de dents fixes indépendantes 15, 16 et de dents centrales mobiles 17 solidaires de la masselotte et qui se déplacent en fonction de l'accélération appliquée, c'est-à-dire en fonction de l'inclinaison du capteur concerné du boîtier d'inclinomètre fixé au corps de pince, par rapport à l'axe de référence vertical. Les deux capacités ainsi constituées entre les dents centrales 17 et les dents mobiles 15 d'une part, 16 d'autre part, sont connectées en série pour former un diviseur capacitif avec l'armature centrale mobile portant les dents 17. Les armatures fixes portant les dents 15, 16 sont pilotées en différentiel par un signal de par exemple 1 MHz de fréquence, fourni par un oscillateur 18 sous la forme de deux signaux s1 et s2 de même amplitude mais déphasés de 180°. Au repos, les valeurs des deux capacités 15-17 et 16-17 sont égales, et la tension de l'armature centrale est nulle. Quand une accélération est appliquée au capteur, les armatures mobiles de la masselotte centrale se déplacent vers l'une des deux séries d'armatures fixes 15 ou 16, ce qui crée un déséquilibre entre les deux capacités et, sur l'armature centrale, un signal s dont l'amplitude varie proportionnellement à l'accélération appliquée. La tension est "bufferisée" en 20 et appliquée à un démodulateur synchrone 21 dont l'horloge est pilotée (liaison 22) en phase par l'oscillateur 18. La sortie c1 de ce démodulateur est positive si la tension s est synchrone et en phase avec l'horloge, et négative si les signaux sont déphasés de 180°, tous les autres signaux étant filtrés. La capacité externe C fixe la bande passante du démodulateur 21.

On obtient ainsi commodément, et avec une précision suffisante, grâce aux accéléromètres correspondants, des signaux représentatifs de l'inclinaison des axes X, Y et éventuellement Z du corps 1 de la pince par rapport à la direction verticale V de référence, et donc représentatifs de' l'orientation de ce corps, par suite de quoi on peut commander automatiquement le déclenchement de la séquence de soudage appropriée, correspondant à l'emplacement ainsi repéré. L'opérateur n'aura plus la possibilité d'intervenir dans ce choix, le boîtier d'inclinomètre ne comportant aucune interface à cet effet. Cependant un afficheur, par exemple du type à sept segments par chiffre, pourra lui indiquer le numéro du programme sur le boîtier d'inclinomètre

Pour la programmation des points de soudage, ceci par l'intermédiaire d'une interface appropriée de l'armoire de programmation, on pourra prévoir de séparer l'espace en zones de 5° selon chacun des trois axes. Ceci a été représenté à la figure 5, par exemple pour l'espace compris entre l'axe longitudinal X du corps 1 de la pince et la direction de référence verticale V. Au moment de la programmation des points de soudage, on déterminera à quelle zone de cet axe X (ou Y) appartient le point défini P. La zone de soudage sera alors celle à laquelle appartient le point P plus la zone attenante de chaque côté. La tolérance sera donc de plus ou moins 10° par rapport à la position programmée, et ceci selon chaque axe, tout autre mode de découpage étant bien entendu également possible.

## Revendications

1. Procédé de sélection automatique d'une séquence de soudage pour pince de soudage manuelle, s'agissant en particulier d'une pince manuelle de soudage électrique à résistance par points pour l'assemblage de tôles, du type comportant un corps (1) de pince relié par un câble souple (4) à une alimentation en courant électrique et portant éventuellement un transformateur-abaisseur propre à alimenter la pince de soudage en courant à haute intensité, ledit corps de pince étant suspendu par l'intermédiaire d'une liaison articulée (9, 13, 14) à une élingue (6) s'étendant au repos selon un axe vertical et pourvue préférentiellement d'un enrouleur-équilibreur (7), laquelle liaison articulée comprend d'une part une couronne circulaire (13) de pivotement à l'intérieur de laquelle ledit corps (1) de pince peut tourner autour d'un axe principal, longitudinal et orientable (X), d'autre part un pivot (14) monté sur ladite couronne circulaire (13) et grâce auquel ladite couronne et donc le corps (1) de la pince peuvent pivoter sur l'extrémité inférieure de ladite élingue (6) autour d'un axe horizontal et latéral (y) perpendiculaire audit axe longitudinal (X), cette pince comportant par ailleurs au moins une poignée de manipulation (10, 11) à l'aide de laquelle un opérateur peut orienter convenablement la pince par rapport aux tôles à souder, suite à quoi il peut déclencher ladite séquence de soudage en actionnant une commande (12) sur la pince, **caractérisé en ce que** ledit corps (1) de la pince est solidaire d'un boîtier d'inclinomètre, lequel est adapté à fournir sous la forme de signaux au moins deux informations :
a) une information représentative de la valeur et du sens de l'angle de pivotement dudit corps (1) de pince autour dudit axe principal et longitudinal (X) par rapport à un axe de référence (V) ; et
b) une information représentative de la valeur et du sens de l'angle de pivotement dudit corps (1) de pince autour dudit axe latéral (y), par rapport audit axe de référence (V),
par suite de quoi ces informations sont utilisées pour identifier l'emplacement de soudage et effectuer la sélection automatique de la séquence de soudage appropriée correspondant à cet emplacement, la séquence de soudage identifiée étant codée de façon à pouvoir être transférée puis exécutée par une armoire de commande de soudage.

2. Procédé selon la revendication 1, **caractérisé par** une phase préalable de programmation ou de reprogrammation des différents points de soudage en mode "apprentissage", effectuée par l'intermédiaire d'une interface séparée de ladite pince, prévue sur un boîtier mobile et autonome, et propre à être connectée à ladite armoire de commande au moment de cette programmation ou reprogrammation, ladite phase consistant, pour chaque point de soudage, à positionner la pince de soudage dans la position souhaitée au point de soudage concerné et à enregistrer dans une mémoire les angles caractéristiques du pivotement du corps (1) de la pince autour desdits axes longitudinal (X) et latéral (y) ainsi que les tolérances acceptables pour ces angles, et l'identification du numéro de la séquence de soudage souhaitée au point considéré, une reprogrammation étant précédée par une opération d'effacement, de ladite mémoire, des paramètres précédemment enregistrés.

3. Procédé selon la revendication 1 ou 2, **caractérisé en ce que** l'on programme dans un séquenceur de soudage un ordre déterminé de déroulement des séquences de soudage, et l'on vérifie, grâce audit boîtier d'inclinomètre, sa concordance avec la séquence détectée.

4. Procédé selon l'une quelconque des revendications précédentes, **caractérisé par** la mise en oeuvre d'une opération de vérification de la position des électrodes, par rapport aux tôles à souder, à l'emplacement de la soudure, afin de contrôler que l'opérateur oriente convenablement la pince en cet emplacement.

5. Procédé selon l'une quelconque des revendications précédentes, **caractérisé en ce que** ledit boîtier d'inclinomètre comprend au moins deux accéléromètres propres à mesurer les déplacements angulaires, par rapport à un axe de référence vertical (V), desdits axes longitudinal (X) et latéral (y) du corps de la pince.

6. Procédé selon la revendication 5, **caractérisé en ce que** ledit boîtier d'inclinomètre comprend un troisième accéléromètre propre à mesurer les déplacements angulaires, par rapport audit axe de référence vertical (V), d'un troisième axe (Z) du corps (1) de la pince de soudage, perpendiculaire auxdits axes latéral et longitudinal (X).

7. Procédé selon la revendication 5 ou 6, **caractérisé en ce que** chacun des plans verticaux contenant les axes longitudinal (X) et latéral (y) du corps de la pince est divisé, de part et d'autre du plan horizontal, en un certain nombre de secteurs identifiables, le repérage de l'orientation de la pince s'effectuant alors par l'identification des deux secteurs dans lesquels se trouve l'axe des deux accéléromètres respectifs correspondants.

8. Procédé selon l'une quelconque des revendications 5 à 7, **caractérisé en ce que** ledit corps (1) de la pince porte supplémentairement un détecteur de rotation autour dudit axe de référence vertical (V).

9. Pince manuelle de soudage électrique par points pour la mise en oeuvre d'un procédé conforme à l'une quelconque des revendications précédentes, du type comportant un corps (1) de pince reliable par un câble souple (4) à une alimentation en courant électrique et portant éventuellement un transformateur-abaisseur propre à alimenter la pince de soudage en courant à haute intensité, ledit corps (1) de pince étant susceptible d'être suspendu par l'intermédiaire d'une liaison articulée (9, 13, 14) à une élingue (6) s'étendant au repos suivant la verticale et pourvue préférentiellement d'un enrouleur-équilibreur (7), cette liaison articulée comprenant habituellement d'une part une couronne circulaire de pivotement (13) à l'intérieur de laquelle ledit corps (1) de pince peut tourner autour d'un axe principal, longitudinal et orientable (X), d'autre part un pivot (14) monté sur ladite couronne circulaire (13) et grâce auquel ladite couronne et donc le corps (1) de la pince peuvent pivoter sur l'extrémité inférieure de ladite élingue (6) autour d'un axe horizontal et latéral (y) perpendiculaire audit axe longitudinal (X), cette pince comportant également au moins une poignée de manipulation (10, 11) à l'aide de laquelle un opérateur peut en usage orienter convenablement la pince par rapport aux tôles à souder, suite à quoi il peut déclencher ladite séquence de soudage en actionnant une commande par gâchette ou analogue (12) sur la pince, **caractérisée en ce que** ledit corps (1) de la pince porte un boîtier d'inclinomètre, lequel est adapté à fournir sous la forme de signaux au moins deux informations :
a) une information représentative de la valeur et du sens de l'angle de pivotement dudit corps (1) de pince autour dudit axe principal et longitudinal (X) par rapport à un axe de référence (V); et
b) une information représentative de la valeur et du sens de l'angle de pivotement dudit corps (1) de pince autour dudit axe latéral (y) par rapport audit axe de référence(V),
par suite de quoi ces informations peuvent être utilisées pour identifier l'emplacement de soudage et effectuer la sélection automatique de la séquence de soudage appropriée correspondant à cet emplacement, la séquence de soudage identifiée étant codée de façon à pouvoir être transférée puis exécutée par une armoire de commande de soudage.

10. Pince selon la revendication 9, **caractérisée en ce que** ledit boîtier d'inclinomètre comprend au moins deux accéléromètres propres à mesurer les déplacements angulaires, par rapport à un axe de référence vertical (V), desdits axes longitudinal (X) et latéral (y) du corps de la pince.

11. Pince selon la revendication 9 ou 10, **caractérisée en ce que** ledit boîtier d'inclinomètre comprend un troisième accéléromètre propre à mesurer les déplacements angulaires, par rapport audit axe de référence vertical (V), d'un troisième axe (Z) du corps (1) de la pince de soudage, perpendiculaire auxdits axes latéral (y) et longitudinal (X).

12. Pince selon l'une quelconque des revendications 9 à 11, **caractérisée en ce que** ledit corps (1) de la pince porte supplémentairement un détecteur de rotation autour dudit axe de référence vertical (V).

13. Pince selon la revendication 10 ou 11, **caractérisée en ce que** lesdits accéléromètres sont de type capacitif et fournissent un signal d'inclinaison du type à impulsions modulées en largeur.

## Patentansprüche

1. Verfahren zur automatischen Auswahl einer Schweißfolge für eine manuelle Schweißzange, wobei es sich insbesondere um eine manuelle, elektrische Punktwiderstands-Schweißzange für die Verbindung von Blechen handelt, der Art, die einen Zangenkörper (1) umfasst, der über ein biegsames Kabel (4) an eine Stromversorgung angeschlossen ist, und eventuell einen Abwärtstransformator trägt, der geeignet ist, die Schweißzange mit Strom hoher Stromstärke zu versorgen, welcher Zangenkörper mittels einer Gelenkverbindung (9, 13, 14) an einer Kranschlinge (6) aufgehängt ist, die sich im Ruhezustand entlang einer vertikalen Achse erstreckt und vorzugsweise mit einer Aufroll-Ausgleichvorrichtung (7) versehen ist, welche Gelenkverbindung einerseits eine kreisförmige Schwenk-Einfassung (13) umfasst, innerhalb derer der Zangenkörper (1) um eine drehbare Haupt-Längsachse (X) drehen kann, und andererseits einen Zapfen (14), der an die kreisförmige Einfassung (13) montiert ist und durch den die Einfassung und somit der Zangenkörper (1) am unteren Ende der Kranschlinge (6) um eine Horizontal- und Querachse (y) schwenken kann, die lotrecht zur Längsachse (X) ist, wobei diese Zange ferner mindestens einen Bedienungsgriff (10, 11) umfasst, mit der eine Bedienungsperson die Zange bezüglich der zu schweißenden Bleche richtig ausrichten kann, woraufhin sie die genannte Schweißfolge auslösen kann, indem sie ein Auslöseorgan (6) an der Zange betätigt, **dadurch gekennzeichnet, dass** der Körper (1 ) der Zange fest verbunden ist mit dem Gehäuse eines Querneigungsanzeigers, der geeignet ist, mindestens zwei Informationen in Form von Signalen zu liefern:
a) eine Information, die den Wert und die Richtung des Schwenkwinkels des Zangenkörpers (1) um die Haupt- und Längsachse (X), bezogen auf eine Bezugsachse (V), wiedergibt; und
b) eine Information, die den Wert und die Richtung des Schwenkwinkels des Zangenkörpers (1) um die genannte Querachse (y), bezogen auf eine Bezugsachse (V), wiedergibt,
welche Informationen anschließend zum Erkennen der Schweißstelle und automatischen Auswählen der geeigneten Schweißfolge genutzt werden, die dieser Stelle entspricht, wobei die erkannte Schweißfolge so codiert ist, dass sie von einem Schweißsteuerschrank übertragen und dann ausgeführt werden kann.

2. Verfahren nach Anspruch 1, **gekennzeichnet durch** einen vorangehenden Schritt der Programmierung oder Neuprogrammierung der einzelnen Schweißpunkte im "Lern"-Modus, die mittels einer getrennten Schnittstelle der Zange ausgeführt wird, die an einem beweglichen und autonomen Gehäuse vorgesehen und geeignet ist, zum Zeitpunkt dieser Programmierung oder Neuprogrammierung an den genannten Steuerschrank angeschlossen zu werden, welcher Schritt für jeden Schweißpunkt eine Positionierung der Schweißzange in der gewünschten Position am entsprechenden Schweißpunkt und das Speichern der charakteristischen Winkel des Schwenkens des Zangenkörpers (1) um die Längsachse (X) und die Querachse (y) sowie der für diese Winkel vertretbaren Toleranzen in einem Speicher und die Erkennung der Nummer der gewünschten Schweißfolge am entsprechenden Punkt umfasst, wobei vor einer Neuprogrammierung die vorher eingespeicherten Parameter im Speicher gelöscht werden.

3. Verfahren nach Anspruch 1 oder 2, **dadurch gekennzeichnet, dass** man in einer Schweißfolgensteuerungsvorrichtung eine bestimmte Reihenfolge des Ablaufs der Schweißfolgen programmiert und mittels des Querneigungsanzeiger-Gehäuses ihre Übereinstimmung mit der ermittelten Folge sicherstellt.

4. Verfahren nach einem der vorstehenden Ansprüche, **gekennzeichnet durch** die Durchführung eines Arbeitsschritts zur Prüfung der Position der Elektroden an der Schweißstelle bezogen auf die zu schweißenden Bleche, damit sichergestellt ist, dass die Bedienungsperson die Zange richtig zu dieser Stelle hin ausrichtet.

5. Verfahren nach einem der vorstehenden Ansprüche, **dadurch gekennzeichnet, dass** das Gehäuse des Querneigungsanzeigers mindestens zwei Beschleunigungsmesser umfasst, die geeignet sind, die Winkelbewegungen der Längsachse (X) und der Querachse (y) des Zangenkörpers (1) bezüglich einer vertikalen Bezugsachse (V) zu messen.

6. Verfahren nach Anspruch 5, **dadurch gekennzeichnet, dass** das Gehäuse des Querneigungsanzeigers einen dritten Beschleunigungsmesser umfasst, der geeignet ist, die Winkelbewegungen einer dritten Achse (Z) des Körpers (1) der Schweißzange, die lotrecht zur Querachse und zur Längsachse (X) ist, bezüglich der vertikalen Bezugsachse (V) zu messen.

7. Verfahren nach Anspruch 5 oder 6, **dadurch gekennzeichnet, dass** jede der vertikalen Ebenen, welche die Längsachse (X) und die Querachse (y) des Zangenkörpers enthalten, beidseits der Horizontalebene in eine bestimmte Anzahl erkennbarer Abschnitte geteilt ist, wobei die Bestimmung der Ausrichtung der Zange dann durch Erkennung der beiden Abschnitte erfolgt, in denen sich die Achse der beiden jeweiligen Beschleunigungsmesser befindet.

8. Verfahren nach einem der Ansprüche 5 bis 7, **dadurch gekennzeichnet, dass** der Zangenkörper (1) zusätzlich einen Drehmessfühler für die Drehung um die vertikale Bezugsachse (V) trägt.

9. Manuelle, elektrische Punktschweißzange zur Durchführung eines Verfahrens nach einem der vorstehenden Ansprüche, der Art, die einen Zangenkörper (1) umfasst, der über ein biegsames Kabel (4) an eine Stromversorgung anschließbar ist und eventuell einen Abwärtstransformator trägt, der geeignet ist, die Schweißzange mit Strom hoher Stromstärke zu versorgen, welcher Zangenkörper (1) geeignet ist, mittels einer Gelenkverbindung (9, 13, 14) an einer Kranschlinge (6) aufgehängt zu werden, die sich im Ruhezustand entlang der Vertikalen erstreckt und vorzugsweise mit einer Aufroll-Ausgleichvorrichtung (7) versehen ist, wobei diese Gelenkverbindung üblicherweise einerseits eine kreisförmige Schwenk-Einfassung (13) umfasst, innerhalb derer der Zangenkörper (1) um eine drehbare Haupt-Längsachse (X) drehen kann, und andererseits einen Zapfen (14), der an die kreisförmige Einfassung (13) montiert ist und durch den die Einfassung und somit der Zangenkörper (1) am unteren Ende der Kranschlinge (6) um eine Horizontal- und Querachse (y) schwenken kann, die lotrecht zur Längsachse (X) ist, wobei diese Zange ferner mindestens einen Bedienungsgriff (10, 11) umfasst, mit der eine Bedienungsperson die Zange im Betrieb bezüglich der zu schweißenden Bleche richtig ausrichten kann, woraufhin sie die genannte Schweißfolge auslösen kann, indem sie ein Auslöseorgan wie einen Drücker oder ein vergleichbares Organ (2) an der Zange betätigt, **dadurch gekennzeichnet, dass** der Körper (1) der Zange ein Gehäuse eines Querneigungsanzeigers trägt, der geeignet ist, mindestens zwei Informationen in Form von Signalen zu liefern:
a) eine Information, die den Wert und die Richtung des Schwenkwinkels des Zangenkörpers (1) um die Haupt- und Längsachse (X), bezogen auf eine Bezugsachse (V), wiedergibt; und
b) eine Information, die den Wert und die Richtung des Schwenkwinkels des Zangenkörpers (1) um die genannte Querachse (y), bezogen auf eine Bezugsachse (V), wiedergibt,
welche Informationen anschließend zum Erkennen der Schweißstelle und automatischen Auswählen der geeigneten Schweißfolge genutzt werden können, die dieser Stelle entspricht, wobei die erkannte Schweißfolge so codiert ist, dass sie von einem Schweißsteuerschrank übertragen und dann ausgeführt werden kann.

10. Zange nach Anspruch 9, **dadurch gekennzeichnet, dass** das Gehäuse des Querneigungsanzeigers mindestens zwei Beschleunigungsmesser umfasst, die geeignet sind, die Winkelbewegungen der Längsachse (X) und der Querachse (y) des Zangenkörpers bezüglich einer vertikalen Bezugsachse (V) zu messen.

11. Zange nach Anspruch 9 oder 10, **dadurch gekennzeichnet, dass** das Gehäuse des Quemeigungsanzeigers einen dritten Beschleunigungsmesser umfasst, der geeignet ist, die Winkelbewegungen einer dritten Achse (Z) des Körpers (1) der Schweißzange, die lotrecht zur Querachse (y) und zur Längsachse (X) ist, bezüglich der vertikalen Bezugsachse (V) zu messen.

12. Zange nach einem der Ansprüche 9 bis 11, **dadurch gekennzeichnet, dass** der Zangenkörper (1) zusätzlich einen Drehmessfühler für die Drehung um die vertikale Bezugsachse (V) umfasst.

13. Zange nach Anspruch 10 oder 11, **dadurch gekennzeichnet, dass** die Beschleunigungsmesser solche der kapazitiven Art sind und ein Neigungssignal der Art mit breitenmodulierten Impulsen liefern.

## Claims

1. Method for automatically selecting a welding sequence for a manual electrode holder, concerning in particular a manual electric resistance spot welding electrode holder for assembling sheet metal, of the type comprising an electrode holder body (1) connected by a flexible cable (4) to an electric current supply and, if appropriate, carrying a step-down transformer to supply the welding electrode holder with high-intensity current, said electrode holder body being suspended by means of an articulated link (9, 13, 14) from a sling (6) extending while at rest along a vertical axis and preferably provided with a balancing reel (7), which articulated link comprises firstly a circular pivot collar (13) inside which said electrode holder body (1) can rotate around a principal longitudinal, swiveling axis (X), and secondly a pivot (14) mounted on said circular collar (13) and by means of which said collar, and therefore the electrode holder body (1), can pivot on the lower end of said sling (6) around a horizontal, lateral axis (y) perpendicular to said longitudinal axis (X), the electrode holder also including at least one handle (10, 11) by means of which an operator can suitably manipulate the electrode holder in relation to the sheet metal to be welded, following which he can initiate said welding sequence by actuating a control (12) on the electrode holder, **characterized in that** said electrode holder body (1) is integral with an inclinometer unit which is able to supply at least two sets of information in the form of signals:
a) information representing the value and direction of the angle of pivot of said electrode holder body (1) around said principal longitudinal axis (X) in relation to a reference axis (V); and
b) information representing the value and direction of the angle of pivot of said electrode holder body (1) around said lateral axis (y) in relation to said reference axis (V),
following which this information is used to identify the welding location and to automatically select the appropriate welding sequence corresponding to this location, the welding sequence identified being so coded as to be able to be transferred to and then executed by a welding control cabinet.

2. Method according to Claim 1, **characterized by** a prior stage of programming or reprogramming the different welding points in a "learning" mode, carried out by means of an interface separate from said electrode holder, provided on a mobile autonomous unit and able to be connected to said control cabinet during this programming or reprogramming, said stage consisting, for each welding point, in positioning the electrode holder in the desired position at the welding point concerned and recording in a memory the characteristic angles of pivot of the electrode holder body (1) around said longitudinal (X) and lateral (y) axes as well as the acceptable tolerances for these angles, in identifying the number in the welding sequence desired at the point concerned, a reprogramming being preceded by an operation to erase the parameters previously recorded from said memory.

3. Method according to Claim 1 or 2, **characterized in that** a determinate order of welding sequences is programmed into a welding sequencer, and its agreement with the sequence detected is verified by means of said inclinometer unit.

4. Method according any one of the preceding claims, **characterized by** the implementation of an operation for verifying the position of the electrodes in relation to the sheet metal to be welded, at the welding location, in order to check that the operator is positioning the electrode holder appropriately at this location.

5. Method according to any one of the preceding claims, **characterized in that** said inclinometer unit includes at least two accelerometers able to measure angular displacements of said longitudinal (X) and lateral (y) axes of the electrode holder body in relation to a vertical reference axis (V).

6. Method according to Claim 5, **characterized in that** said inclinometer unit includes a third accelerometer able to measure angular displacements in relation to said vertical reference axis (V) of a third axis (Z) of the electrode holder body (1) perpendicular to said lateral and longitudinal (X) axes.

7. Method according to Claim 5 or 6, **characterized in that** each of the vertical planes containing the longitudinal (X) and lateral (y) axes of the electrode holder body is divided on either side of the horizontal plane into a certain number of identifiable sectors, the orientation of the electrode holder being registered by identifying the two sectors in which the axes of the two corresponding accelerometers are located respectively.

8. Method according to any one of Claims 5 to 7, **characterized in that** said electrode holder body (1) additionally carries a detector of rotation around said vertical reference axis (V).

9. Manual electric spot welding electrode holder for implementing a method according to any one of the preceding claims, of the type comprising an electrode holder body (1) connectable by a flexible cable (4) to an electric current supply and, if appropriate, carrying a step-down transformer able to supply the welding electrode holder with high-intensity current, said electrode holder body (1) being capable of being suspended by means of an articulated link (9, 13, 14) from a sling (6) extending while at rest along a vertical axis and preferably provided with a balancing reel (7), which articulated link usually comprises firstly a circular pivot collar (13) inside which said electrode holder body (1) can rotate around a principal longitudinal, swiveling axis (X), and secondly a pivot (14) mounted on said circular collar (13) and by means of which said collar, and therefore the electrode holder body (1), can pivot on the lower end of said sling (6) around a horizontal, lateral axis (y) perpendicular to said longitudinal axis (X), the electrode holder also including at least one handle (10, 11) by means of which an operator can in use suitably manipulate the electrode holder in relation to the sheet metal to be welded, following which he can initiate said welding sequence by actuating a control by a trigger or similar device (12) on the electrode holder, **characterized in that** said electrode holder body (1) carries an inclinometer unit which is able to supply at least two sets of information in the form of signals:
a) information representing the value and direction of the angle of pivot of said electrode holder body (1) around said principal longitudinal axis (X) in relation to a reference axis (V); and
b) information representing the value and direction of the angle of pivot of said electrode holder body (1) around said lateral axis (y) in relation to said reference axis (V),
following which this information is used to identify the welding location and to automatically select the appropriate welding sequence corresponding to this location, the welding sequence identified being so coded as to be able to be transferred to and then executed by a welding control cabinet.

10. Electrode holder according to Claim 9, **characterized in that** said inclinometer unit includes at least two accelerometers able to measure angular displacements of said longitudinal (X) and lateral (y) axes of the electrode holder body in relation to a vertical reference axis (V).

11. Electrode holder according to Claim 9 or 10, **characterized in that** said inclinometer unit includes a third accelerometer able to measure angular displacements in relation to said vertical reference axis (V) of a third axis (Z) of the electrode holder body (1) perpendicular to said lateral (y) and longitudinal (X) axes.

12. Electrode holder according to any one of Claims 9 to 11, **characterized in that** said electrode holder body (1) additionally carries a detector of rotation around said vertical reference axis (V).

13. Electrode holder according to Claim 10 or 11, **characterized in that** said accelerometers are of the capacitance type and supply an inclination signal of the width-modulated pulse type.
